# EUROPEAN PATENT SPECIFICATION

(11) **EP 2 773 593 B1**
(45) Date of publication and mention of the grant of the patent: **15.07.2020**
(21) Application number: 12791352.3
(22) Date of filing: 01.11.2012
(51) Int. Cl.: C03B 5/225, C03C 3/087, C03B 3/02, C03C 1/02

(54) **PROCESS FOR MELTING AND REFINING SILICA-BASED GLASS**
VERFAHREN ZUM SCHMELZEN UND ZUR LÄUTERUNG VON SILIKATGLAS
PROCÉDÉ DE FUSION ET D'AFFINAGE DE VERRE À BASE DE SILICE

(30) Priority: 03.11.2011 US 201113288681; 17.10.2012 US 201213653992
(43) Date of publication of application: 10.09.2014
(73) Proprietor: Owens-Brockway Glass Container INC., Perrysburg, OH 43551 (US)
(72) Inventor: DEWET-SMITH, Dawid, Perrysburg, OH 43551 (US); LEIDY, D., Wayne, Perrysburg, OH 43551 (US); FAYERWEATHER, Carl, Lucas, Maumee, OH 43537 (US); SWILER, Daniel, Russell, Maumee, OH 43537 (US); CLARK, Terence, John, Sanford, MI 48657 (US); HIXSON, Brett, Evan, Adrian, MI 49221 (US)
(74) Representative: Blumbach · Zinngrebe Patentanwälte PartG mbB
(86) International application number: PCT/US2012/062978
(87) International publication number: WO 2013/067129

(56) References cited:
- JP-A- 9 052 729
- US-A- 3 445 255
- US-A- 3 532 483
- US-A- 4 325 724
- US-A1- 2004 050 106
- US-A1- 2004 224 833
- US-B1- 6 883 349
- "REFINING OF GLASSES UNDER SUBATMOSPHERIC PRESSURES", BOLETIN DE LA SOCIEDAD ESPANOLA DE CERAMICA Y VIDRIO, SOCIEDAD ESPANOLA DE CERAMICA Y VIDRIO, MADRID, ES, vol. 31C, no. 6, 1 January 1992 (1992-01-01), pages 173-178, XP002024033, ISSN: 0366-3175

## Description

The present disclosure relates to a process for melting and refining silica-based glass, and particularly to such a process that employs sodium-calcium-silicate glass as an intermediate or precursor product.

### Background and Summary of the Disclosure

Silica-based glass, such as soda-lime glass, is prevalent in the manufacture of glass containers and other products. Formation of the glass melt typically involves mixing the various glass-forming components at elevated temperature. The glass typically has a residence time in a furnace on the order of twenty-four hours to fully dissolve the raw materials of the batch composition and to refine the glass by driving off gases. The gases must be driven off ultimately to produce a solidified glass product without entrained gas bubbles. (The process of removing bubbles in molten glass is called "refining," sometimes referred to as "fining.") In addition to being undesirably slow, this in-furnace process involves a large amount of space and high energy input.

A general object of the present disclosure is to provide a process for making silica-based glass, which is more rapid and requires less energy input than conventional processes.

"Refining of Glass Under Subatmospheric Pressures" Boletin de la Sociedad 20 Espanola de Ceramica y Vidrio, Sociedad Espanola de Ceramica y Vidrio, Madrid, ES, vol. 31C, no. 6, 1 January 1992 (1992-01-01), pages 173-178, XP002024003, ISSN: 0366-3175 discloses a subatmospheric treatment that can be used in a refining process to reduce the number of bubbles in molten soda-lime, borosilicate, and aluminoborosilicate glasses, as well as the tendency of the glasses to reboil upon stirring. The subatmospheric treatment was conducted at pressures of 0.1 to 0.2 atmospheres (atms) for 60 min in the temperature range from 1350 to 1400° C prior to stirring.

US 2004/0050106 A1 discloses a process of producing glass materials wherein outgassing materials are mixed, melted, outgassed and formed into frits. The frits are then mixed with essentially non-outgassing materials and melted to form the glass. Because the frits are already outgassed, less gas is generated in the final glass melting step, thus foaming and scum forming are reduced.

US 3445255 discloses a method for altering the viscosity of soda-lime glasses to achieve a family of faster setting glasses by admixing a small amount of a glass frit with the glass in the forehearth of a conventional glass melting furnace. US 6883349 B1 discloses a process for manufacturing compounds based on one or more silicates of alkali metals, such as Na and K, and/or alkaline earth metals, such as Ca and Mg, by conversion of silica and of halides of the said alkali metals and/or of the said alkaline earth metals, such as NaCl. The alkali metal or alkaline earth metal silicates produced by the disclosed process may be used to feed a glass furnace and to replace some of the conventional batch materials.

U.S. Patent Application Publication 2004/0224833 A1 relates to a plant and to a process for manufacturing a glass. The glass is processed from two different glasses especially for producing colored glass. Two different glasses are used, because if the infrared-absorbing pigment is introduced in the batch charging end like the other batch materials, the atmospheric burners would have a great difficulty in heating in the depths of the liquid glass. The two glasses have similar viscosity.

U.S. Patent 3 532 483 relates to a glass making process and apparatus, wherein batch materials of different proportions of ingredients are deposited at two separate locations in the furnace. The first material is melted at relatively low temperature, the second batch materials comprise higher melting-point ingredients and are melted at a higher temperature. The temperature of the first material is lower than that required for fining, but efficient for fusing the low melting ingredients.

The present disclosure embodies a number of aspects that can be implemented separately from or in combination with each other.

A process for making a silica-based glass, in accordance with one aspect of the present disclosure, includes: reacting at least one glass network former and at least one glass network modifier to form a glass precursor melt, the glass precursor melt being at a temperature in the range of 900° C to 1700° C and having a viscosity of not more than 30 Pa·s, and refining the glass precursor melt. Target viscosity preferably is less than 15 Pa·s, more preferably less than 8 Pa·s and most preferably not more than 3 Pa·s. Target viscosity can be in the range of 1 to 3Pa·s, with a value of 2Pa·s being a preferred target. Glass viscosity can be measured at a temperature of 1300° C by an Orton RSV-1600 viscometer using an Orton part number 13-1500 spindle. Other viscosity measuring techniques can be employed.

The term "glass network former" is employed in its usual sense in the art as referring to oxides and non-oxides capable of forming and being incorporated into a random glass network or lattice. Silica (SiO₂), alumina (Al₂O₃) and boric oxide (B₂O₃) are three examples of glass network formers. The term "glass network modifier" likewise is employed in its usual sense to refer to oxides within the glass that do not participate in forming the glass network structure and force the glass network to form around the modifier. Examples include the oxides of the alkali metals (sodium, lithium and potassium) and oxides of the alkaline earth metals (calcium, magnesium and barium).
Either or both steps can be carried out under reduced pressure to enhance refining. The refined glass precursor melt is mixed with additional glass network former materials, including silica (SiO₂) and/or non-gas releasing network modifiers, to reach the desired glass melt composition. Cullet and/or minor ingredients such as colorants can be added at this stage. The step of refining the glass precursor melt can include stirring.

The term "gas releasing" is used to describe chemical forms of an element that evolve gases upon decomposition, including the carbonate, bicarbonate, sulfate, hydrate, hydroxide, nitrate, chloride or acid form(s) of a given element. The term "non-gas releasing" is used to describe chemical forms of an element that do not evolve gases upon decomposition, including the oxide, sulfide and elemental forms of a given element.

A process for making a silica-based glass in accordance with another aspect of the present disclosure includes: (a) forming a low-viscosity sodium-calcium-silicate solution in liquid phase while releasing gaseous reaction products, and (b) mixing the sodium-calcium-silicate solution with additional material including silica to form a soda-lime glass melt. Step (a) is carried out by (al) melting, reacting and refining calcium carbonate, soda ash and silica, or (a2) by melting, reacting and refining salt and silica in the presence of water followed by addition of calcium carbonate. The sodium-calcium-silicate liquid solution intermediate phase product of step (a) has a viscosity of not more than 30 Pa·s to promote release of gaseous reaction products such as carbon dioxide in step (al) or hydrogen chloride in step (a2). Step (a) and/or step (b) can be carried out under reduced pressure further to promote release of gaseous reaction products. Step (b) can include stirring.

A process for making a glass precursor melt in accordance with the disclosure includes mixing at least one glass network former with at least one glass network modifier, and refining the glass precursor melt by performing at least part of the mixing step at elevated temperature and under reduced pressure to promote release of gases. All of the gas releasing glass network modifiers and preferably all of the gas releasing glass network formers that are required to achieve the desired glass product melt composition are added to the precursor melt for refining in step (d). Additional non-gas releasing glass network formers and non-gas releasing glass network modifiers are mixed with the glass precursor melt to form the desired glass product melt composition. Cullet and/or minor ingredients such as colorants can be added.

### Brief Description of the Drawings

The disclosure, together with additional objects, features, advantages and aspects thereof, will best be understood from the following description, the appended claims and the accompanying drawings, in which:
FIG. 1 is a block diagram of a process for reacting, melting and refining silica-based glass in accordance with one exemplary embodiment of the disclosure; and
FIG. 2 is a block diagram of a process for reacting, melting and refining silica-based glass in accordance with a second exemplary embodiment of the disclosure.

### Detailed Description of Preferred Embodiments

The ASTM defines glass as "an inorganic product of fusion which has been cooled to a rigid condition without crystalizing." Traditional glasses are composed of glass forming oxides (oxides that can form glasses by themselves), intermediate oxides (oxides that can form glasses if mixed with a small amount of other selected oxides), and glass network modifiers (oxides that are difficult to vitrify but are used to modify the structure and properties of a glass composed of glass forming and/or intermediate oxides).

One particular classification (Varshneya) places elements and their oxides into the following categories:
- Glass formers: B, Si, Ge, Al, P, V, As, Sb, Zr
- Intermediates: Ti, Zn, Al, Th, Be, Zr, Cd
- Modifiers: Sc, La, Y, Sn, Ga, In, Th, Mg, Li, Pb, Zn, Ba, Ca, Sr, Cd, Na, Ce, K, Rb, Hg, Cs.
Among the list given above, the elements most often used as modifiers in commercial glass manufacture are alkalis. The container glass industry traditionally has used silica (SiO₂) as the glass forming oxide with varying amounts of sodium and calcium oxides as glass modifiers, and small amounts of intermediates such as aluminum oxides. An appropriately chosen glass composition typically is prepared by the following three steps—(a) batch melting, (b) homogenization (primarily sand dissolution), and (c) refining or bubble removal. The process of refining or removing bubbles, either by dissolving them in the melt or by allowing them to rise to the top of the melt, often is the most time consuming step in the melting operation.

Preferred glass network formers are compounds of Si, Al and B. Glass network formers preferably are in an oxide form. Preferred glass network modifiers are compounds of sodium, lithium and/or potassium, and/or compounds of calcium, magnesium and/or barium. Glass network modifiers and intermediates can be selected from the group consisting of oxide, carbonate, bicarbonate, sulfate, sulfide, hydride, hydroxide, nitrate and/or chloride forms of the recited elements.

In the past, various methods have been explored in an effort to reduce glass refining time; these methods typically required a great deal of energy and were very time consuming. Most methods involve heating the glass melt to temperatures well above the raw material batch melting point, introducing refining agents that either help dissolve the bubbles or increase the size of the bubbles which causes the bubbles to rise to the top of melt quicker, reducing the height (thickness) of the glass melt (during the refining step), and/or increasing the residence time of the glass melt to achieve more thorough refining. Other refining methods have employed vacuum, ultrasonic waves and centrifugal acceleration to assist in bubble removal with limited commercial success.

The present disclosure recognizes that most bubbles in a glass melt are CO₂ or SO₂ that is released during the dissolution of the raw batch materials and that the refining, or removal of bubbles from a glass melt, is more easily accomplished if the melt has a low viscosity. Network modifiers reduce the viscosity of a glass melt so that the bubbles can rise to the top of the melt more quickly. Therefore, in this disclosure, most, if not all, of the raw materials that evolve gasses preferably are added to the low viscosity glass precursor melt to achieve more thorough and faster refining, prior to adding the remaining glass network forming materials to produce the final glass melt composition. The glass precursor melt is a melt formulated to have a viscosity less than 30 Pa·s. Traditional raw materials such as soda ash (Na₂CO₃) and calcium carbonate (CaCO₃) release primarily carbon dioxide, and should be for the most part added prior to refining of the precursor melt. In addition, it should be noted that a wide variety of gas releasing raw materials may be advantageously added into the precursor melt. These compounds may include sulfates, sulfides, hydrates, hydroxides, chlorides, nitrates and nitride compounds of desired metals.

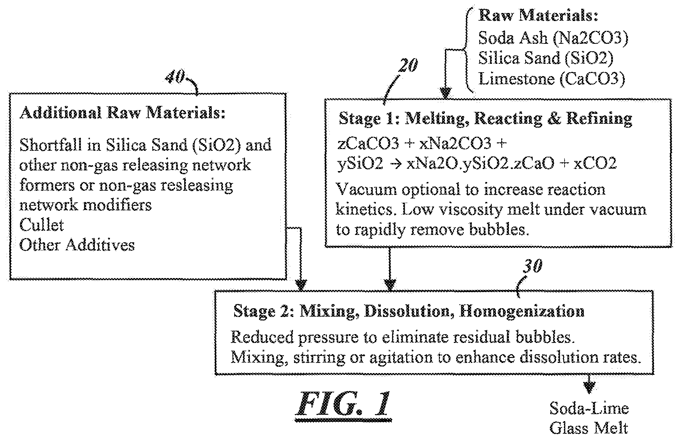

FIG. 1 illustrates a process for making silica-based glass in accordance with one exemplary embodiment of the present disclosure. A first stage 20 of the process involves melting, reacting and refining input materials and production of a low-viscosity sodium-calcium-silicate (Na₂O-SiO₂·CaO) solution in liquid phase by melting, reacting and refining silica (SiO₂) and substantially all of the desired gas releasing glass network modifiers. This reaction produces a silicate solution in liquid phase and having a relatively low viscosity to promote release of gas reaction products. The term "low-viscosity" in accordance with the present disclosure means having a viscosity of not more than 30 Pa·s, preferably less than 15 Pa·s, more preferably less than 8 Pa·s, yet more preferably not more than 3 Pa·s. Target viscosity can be in the range of 1 to 3Pa·s, with a value of 2Pa·s being a preferred target. Glass viscosity can be measured at a temperature of 1300° C by an Orton RSV-1600 viscometer using an Orton part number 13-1500 spindle. Other viscosity measuring techniques can be employed. This first stage 20 preferably is carried out under reduced pressure (vacuum) further to promote release of gaseous reaction products. The silicate solution precursor melt or intermediate product of this first stage typically has a silica molar content on the order of 40-60%.

The silicate solution precursor melt or intermediate product of the first stage 20 is fed to the second stage 30, which involves mixing, dissolution and homogenization of the glass precursor melt with additional raw materials 40, including the shortfall of glass network formers silica (SiO₂) or alumina (Al₂O₃) or boric oxide (B₂O₃) and additional non-gas releasing network modifier materials needed to reach the desired composition of the final glass melt. Cullet and/or minor ingredients such as colorants 40 can be added in this second stage 30. Additional silica is added at the second stage 30 to reach the desired final glass composition with a silica content typically on the order of 65-80% by weight. The second stage 30 can include stirring and/or other mixing to promote dissolution and homogenization of the final silica-based glass melt.

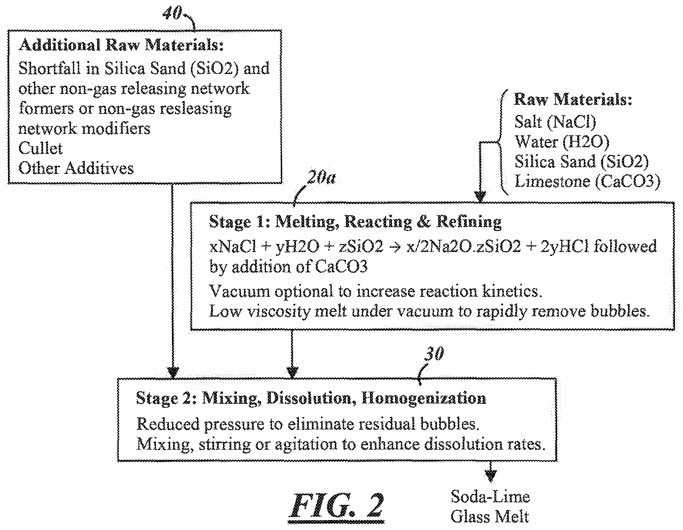

FIG. 2 illustrates a second embodiment of the process in accordance with the present disclosure. In this process, the first stage 20a involves melting, reacting and refining salt (NaCl) and silica (SiO₂) in the presence of water (H₂O, preferably steam) to produce sodium silicate (Na₂O.SiO₂) and release hydrogen chloride (HCl) gas. This step is immediately followed by addition of calcium carbonate (CaCO₃) such as limestone. The calcium carbonate is rapidly melted, again to produce a low-viscosity sodium-calcium-silicate solution in liquid phase to promote release of gaseous reaction products. Again, the first stage 20a can be carried out under vacuum further to promote release of gaseous reaction products. The second stage 30, which involves mixing, dissolution and homogenization of the precursor melt with additional raw materials 40 in FIG. 2 is the same as the second stage in FIG. 1. The result of either process is a silica-based glass melt.

The first stage 20 in FIG. 1 or 20a in FIG. 2 is carried out at a temperature in the range of 900° C to 1700° C. The second stage 30 in FIGS. 1 and 2 preferably is carried out at a temperature greater than about 900C. Preferably, the first stage 20 or 20a is carried out at a temperature of about 1250° C not more than 2 hours. The glass network modifiers within the precursor melt 20 or 20a preferably have an alkali metal to alkaline metal molar ratio of 1:3 to 3:1. The glass precursor melt preferably has a glass network former to glass network modifier molar ratio of 2:1.5 to 1:2. The sodium-calcium-silicate solution glass precursor melt of the first stage 20 or 20a preferably has a sodium:calcium:silica molar ratio of about 1:1:1.5 to 1:1:4.

In summary, the glass precursor melt composition at the first stage 20 or 20a is designed to minimize the viscosity at reasonable processing temperatures to facilitate refining. Therefore, all glass network modifiers that are in a chemical form that releases gases upon decomposition are added in the first stage (20 or 20a). And, all glass network formers
that are added in chemical form that releases gases upon decomposition are added in the first stage. Additionally, any glass network former or glass network modifier that is added in a chemical form that does not release gases upon decomposition may be added in the first stage at appropriate chemical ratios to minimize the viscosity of the glass precursor melt. All materials added in the second stage (30) are to be in a chemical form that does not release a significant quantity of gases upon decomposition.

## Claims

1. A process for making a silica-based glass composition, which includes the steps of:
(a) providing input raw materials including a glass network former and gas releasing glass network modifiers to form a glass precursor melt;
(b) providing additional raw materials including an additional non-gas releasing glass network former and non-gas releasing glass network modifiers;
(c) melting and reacting said input raw materials to form said glass precursor melt having a temperature in the range of 900 °C to 1700 °C and having a viscosity of not more than 30 Pa·s,
(d) refining said glass precursor melt; and then
(e) adding said additional raw materials to said refined glass precursor melt to form a final silica-based glass composition,
wherein all gas releasing glass network modifiers required to form said final silica-based glass composition in step (e) are provided in step (a).

2. The process set forth in claim 1 wherein said step (d) is performed under reduced pressure.

3. The process set forth in claim 1 wherein said glass network former is selected from the group consisting of compounds of Si, Al, Ge, P, V, Sb, Zr, and B.

4. The process set forth in claim 3 wherein said glass network former is selected from the group consisting of the oxide, sulfide, or acid forms of the recited elements.

5. The process set forth in claim 1 wherein said gas releasing glass network modifiers and said non-gas releasing glass network modifiers are selected from the group consisting of elements and compounds of Sc, La, Y, Sn, Ga, In, Th, Pb, Mg, Li, Zn, Ba, Ca, Sr, Cd, Na, Ce, K, Rb, Hg, and Cs.

6. The process set forth in claim 5 wherein said gas releasing glass network modifiers are selected from the group consisting of the carbonate, bicarbonate, sulfate, hydrate, hydroxide, nitrate, chloride or acid forms of the recited elements.

7. The process set forth in claim 5 wherein said non-gas releasing glass network modifiers are selected from the group consisting of the oxide, sulfide, or elemental forms of the recited elements.

8. The process set forth in claim 1
wherein said step (e) includes stirring.

9. The process set forth in claim 1 wherein said additional raw materials include cullet.

10. The process set forth in claim 1
wherein said step (e) is carried out at a temperature greater than about 900°C.

11. The process set forth in claim 1 wherein said step (e) is carried out at a temperature of between 1250°C and 1450°C.

12. The process set forth in claim 1
wherein said glass network modifiers are selected from the groups consisting of oxides of alkali metals and of oxides of alkaline earth metals.

13. The process set forth in claim 1 wherein said glass precursor melt has an alkali metal to alkaline earth metal molar ratio of 1:3 to 3:1.

14. The process set forth in claim 1 wherein said glass network former provided in step (a) and said non-gas releasing glass network former provided in step (b) comprise silica (SiO₂).

15. The process set forth in claim 1 wherein said glass precursor melt has a viscosity of not more than 3 Pa·s.

16. The process set forth in claim 1,
wherein said glass network modifiers are compounds of sodium, lithium and/or potassium, and/or compounds of calcium, magnesium and or barium.

17. The process set forth in claim 1,
wherein said gaseous reactions products from said glass precursor melt evolved upon decomposition of said gas releasing glass network modifiers in step (c).

18. The process set forth in claim 1,
wherein the additional raw materials provided in step (b) are additional non-gas releasing raw materials.

19. The process set forth in claim 1,
wherein all additional non-gas releasing raw materials are in a chemical form that does not release a significant quantity of gases upon decomposition.

## Patentansprüche

1. Verfahren zur Herstellung einer Glaszusammensetzung auf Basis von Siliciumdioxid, mit folgenden Schritten:
(a) Bereitstellen von Ausgangsrohstoffen einschließlich eines Glasnetzwerkbildners und Gas freisetzender Glasnetzwerkmodifikatoren, um eine Glasvorläuferschmelze auszubilden,
(b) Bereitstellen zusätzlicher Rohstoffe einschließlich eines zusätzlichen, kein Gas freisetzenden Glasnetzwerkbildners und kein Gas freisetzender Glasnetzwerkmodifikatoren;
(c) Schmelzen und Reagieren lassen der Ausgangsrohstoffe unter Bildung der Glasvorläuferschmelze auf einer Temperatur im Bereich von 900 °C bis 1700 °C und mit einer Viskosität von höchstens 30 Pa·s,
(d) Läutern der Glasvorläuferschmelze; und danach
(e) Zusetzen der zusätzlichen Rohstoffe zu der geläuterten Glasvorläuferschmelze, um eine endgültige Glaszusammensetzung auf Basis von Siliciumdioxid auszubilden,
wobei sämtliche Gas freisetzenden Glasnetzwerkmodifikatoren, die zur Ausbildung der endgültigen Glaszusammensetzung auf Basis von Siliciumdioxid in Schritt (e) erforderlich sind, in Schritt (a) bereitgestellt werden.

2. Verfahren nach Anspruch 1,
wobei Schritt (c) unter vermindertem Druck durchgeführt wird; und/oder wobei Schritt (d) unter vermindertem Druck durchgeführt wird.

3. Verfahren nach Anspruch 1, wobei der Glasnetzwerkbildner ausgewählt wird aus der Gruppe bestehend aus Verbindungen von Si, Al, Ge, P, V, Sb, Zr und B.

4. Verfahren nach Anspruch 3, wobei der Glasnetzwerkbildner ausgewählt wird aus der Gruppe bestehend aus den Oxid-, Sulfid- oder Säureformen der angegebenen Elemente.

5. Verfahren nach Anspruch 1, wobei die Gas freisetzenden Glasnetzwerkmodifikatoren und die kein Gas freisetzenden Glasnetzwerkmodifikatoren ausgewählt werden aus der Gruppe bestehend aus Elementen und Verbindungen von Sc, La, Y, Sn, Ga, In, Th, Pb, Mg, Li, Zn, Ba, Ca, Sr, Cd, Na, Ce, K, Rb, Hg und Cs.

6. Verfahren nach Anspruch 5, wobei die Gas freisetzenden Glasnetzwerkmodifikatoren ausgewählt werden aus der Gruppe bestehend aus den Carbonat-, Bicarbonat-, Sulfat-, Hydrat-, Hydroxid-, Nitrat-, Chlorid- oder Säureformen der angegebenen Elemente.

7. Verfahren nach Anspruch 5, wobei die kein Gas freisetzenden Glasnetzwerkmodifikatoren ausgewählt werden aus der Gruppe bestehend aus den Oxid-, Sulfid- oder Elementformen der angegebenen Elemente.

8. Verfahren nach Anspruch 1, wobei Schritt (e) unter Rühren erfolgt.

9. Verfahren nach Anspruch 1, wobei die zusätzlichen Rohstoffe Scherben umfassen.

10. Verfahren nach Anspruch 1, wobei Schritt (e) bei einer Temperatur von mehr als etwa 900 °C erfolgt.

11. Verfahren nach Anspruch 1, wobei Schritt (e) bei einer Temperatur zwischen 1250 °C und 1450 °C erfolgt.

12. Verfahren nach Anspruch 1, wobei die Glasnetzwerkmodifikatoren ausgewählt werden aus den Gruppen bestehend aus Oxiden von Alkalimetallen und Oxiden von Erdalkalimetallen.

13. Verfahren nach Anspruch 1, wobei die Glasvorläuferschmelze ein Molverhältnis von Alkalimetall zu Erdalkalimetall von 1:3 bis 3:1 aufweist.

14. Verfahren nach Anspruch 1, wobei der in Schritt (a) bereitgestellte Glasnetzwerkbildner und der in Schritt (b) bereitgestellte kein Gas freisetzende Glasnetzwerkbildner Siliciumdioxid (SiO₂) umfassen.

15. Verfahren nach Anspruch 1, wobei die Glasvorläuferschmelze eine Viskosität von höchstens 3 Pa·s aufweist.

16. Verfahren nach Anspruch 1, wobei die Glasnetzwerkmodifikatoren Verbindungen von Natrium, Lithium und/oder Kalium und/oder Verbindungen von Calcium, Magnesium und/oder Barium sind.

17. Verfahren nach Anspruch 1, wobei die gasförmigen Reaktionsprodukte aus der Glasvorläuferschmelze bei Zersetzung der Gas freisetzenden Glasnetzwerkmodifikatoren in Schritt (c) entstehen.

18. Verfahren nach Anspruch 1, wobei die in Schritt (b) bereitgestellten zusätzlichen Rohstoffe kein Gas freisetzende zusätzliche Rohstoffe sind.

19. Verfahren nach Anspruch 1, wobei sämtliche kein Gas freisetzenden zusätzlichen Rohstoffe in einer chemischen Form vorliegen, die bei Zersetzung keine signifikante Menge an Gasen freisetzt.

## Revendications

1. Procédé de production d'une composition de verre à base de silice, comportant les étapes suivantes :
a) prendre des matières premières sources, y compris un formateur de réseau vitreux et des modificateurs de réseau vitreux libérant des gaz, pour en faire une masse fondue de précurseur de verre,
b) prendre des matières premières supplémentaires, y compris un formateur supplémentaire de réseau vitreux ne libérant pas de gaz et des modificateurs supplémentaires de réseau vitreux ne libérant pas de gaz,
c) faire fondre et faire réagir lesdites matières premières sources pour former ladite masse fondue de précurseur de verre, portée à une température située dans l'intervalle allant de 900 °C à 1700 °C et présentant une viscosité d'au plus 30 Pa.s,
d) affiner ladite masse fondue de précurseur de verre,
e) et ajouter alors lesdites matières premières supplémentaires à ladite masse fondue de précurseur de verre affinée, pour en faire une composition finale de verre à base de silice,
dans lequel procédé l'on prend, dans l'étape (a), tous les modificateurs de réseau vitreux libérant des gaz qui sont nécessaires pour former, dans l'étape (e), ladite composition finale de verre à base de silice.

2. Procédé conforme à la revendication 1,
dans lequel ladite étape (c) est effectuée sous pression réduite,
et/ou dans lequel ladite étape (d) est effectuée sous pression réduite.

3. Procédé conforme à la revendication 1, dans lequel ledit formateur de réseau vitreux est choisi dans l'ensemble formé par les composés des éléments suivants : Si, Al, Ge, P, V, Sb, Zr et B.

4. Procédé conforme à la revendication 3, dans lequel ledit formateur de réseau vitreux est choisi dans l'ensemble formé par les oxydes, sulfures et formes acides des éléments cités.

5. Procédé conforme à la revendication 1, dans lequel lesdits modificateurs de réseau vitreux libérant des gaz et lesdits modificateurs de réseau vitreux ne libérant pas de gaz sont choisis dans l'ensemble formé par les éléments suivants et leurs composés : Sc, La, Y, Sn, Ga, In, Th, Pb, Mg, Li, Zn, Ba, Ca, Sr, Cd, Na, Ce, K, Rb, Hg et Cs.

6. Procédé conforme à la revendication 5, dans lequel lesdits modificateurs de réseau vitreux libérant des gaz sont choisis dans l'ensemble formé par les carbonates, bicarbonates, sulfates, hydrates, hydroxydes, nitrates, chlorures et formes acides des éléments cités.

7. Procédé conforme à la revendication 5, dans lequel lesdits modificateurs de réseau vitreux ne libérant pas de gaz sont choisis dans l'ensemble formé par les oxydes, sulfures et formes élémentaires des éléments cités.

8. Procédé conforme à la revendication 1, dans lequel ladite étape (e) comporte un brassage.

9. Procédé conforme à la revendication 1, dans lequel lesdites matières supplémentaires comprennent un calcin.

10. Procédé conforme à la revendication 1, dans lequel ladite étape (e) est réalisée à une température supérieure à environ 900 °C.

11. Procédé conforme à la revendication 1, dans lequel ladite étape (e) est réalisée à une température située entre 1250 et 1450 °C.

12. Procédé conforme à la revendication 1, dans lequel lesdits modificateurs de réseau vitreux sont choisis dans l'ensemble constitué par les oxydes des métaux alcalins et les oxydes des métaux alcalino-terreux.

13. Procédé conforme à la revendication 1, dans lequel, dans ladite masse fondue de précurseur de verre, le rapport molaire des métaux alcalins aux métaux alcalino-terreux vaut de 1/3 à 3/1.

14. Procédé conforme à la revendication 1, dans lequel ledit formateur de réseau vitreux, pris dans l'étape (a), et ledit formateur de réseau vitreux ne libérant pas de gaz, pris dans l'étape (b), compren-nent de la silice (SiO₂).

15. Procédé conforme à la revendication 1, dans lequel ladite masse fondue de précurseur de verre présente une viscosité d'au plus 3 Pa.s.

16. Procédé conforme à la revendication 1, dans lequel lesdits modificateurs de réseau vitreux sont des composés du sodium, du lithium et/ou du potassium et/ou des composés du calcium, du magnésium et/ou du baryum.

17. Procédé conforme à la revendication 1, dans lequel lesdits produits gazeux de réaction issus de ladite masse fondue de précurseur de verre se dégagent à la suite de la décomposition, lors de l'étape (c), desdits modificateurs de réseau vitreux libérant des gaz.

18. Procédé conforme à la revendication 1, dans lequel les matières premières supplémentaires prises dans l'étape (b) sont des matières premières supplémentaires ne libérant pas de gaz.

19. Procédé conforme à la revendication 1, dans lequel toutes les matières premières supplémentaires ne libérant pas de gaz se trou-vent sous une forme chimique telle qu'elles ne libèrent pas de gaz en quantités significatives à la suite de leur décomposition.
